# EUROPEAN PATENT APPLICATION

(11) **EP 1 320 259 A2**
(43) Date of publication of application: **18.06.2003**
(21) Application number: 02255508.0
(22) Date of filing: 07.08.2002
(51) Int. Cl.: H04N 5/64

(54) **Display apparatus and tuner unit**

(30) Priority: 17.12.2001 KR 2001080128
(71) Applicant: SAMSUNG ELECTRONICS CO., LTD., Suwon-City, Kyungki-do (KR)
(72) Inventor: Lee, Kyung-Kyun, Seoul City (KR); Lee, You-sub, Kunpo city, Kyungki-do (KR)
(74) Representative: Derry, Paul Stefan

(57) **Abstract**

Display apparatus 1 includes an LCD panel 30, a main PCB 31 and a PCB supporting member 40 disposed between front and rear covers 10, 20. A tuner accommodating part 60, hooked onto the PCB supporting member 40, includes a housing into which a TV tuner unit 50 is removably inserted. A release member 62 is inserted through a hole in the rear cover 20, and connects with the TV tuner unit 50 when it is included in the tuner accommodating part 60. The TV tuner unit 50 is easily joined to and released from the display apparatus. An earth connection extends from the PCB supporting member 40 through apertures in the tuner accommodating part 60 and a casing of the TV tuner 50 to contact with an earth part of circuitry in the TV tuner.

## Description

A first aspect of the present invention relates to display apparatus comprising a display panel mounted within a housing; and a tuner accommodating part disposed within the housing. A second aspect of the invention relates to a tuner unit. A third aspect of the invention relates to a method of assembling a display apparatus.

A display apparatus, such as a monitor for a TV set or a computer system, may include a cathode ray tube (CRT) monitor or a liquid crystal display (LCD) monitor, etc. CRT monitors operate on the principle that when electron beams according to video signals strike a monochrome or red, green, blue (RGB) fluorescent material painted on a CRT panel, light having different brightness and various colours is generated. CRT monitors are widely used because they are inexpensive and have a good display quality, but they tend to be bulky.

LCD monitors employ a different principle, namely that when a predetermined voltage is supplied to a LCD panel, the molecular arrangement thereof varies to prevent light from passing therethrough.

LCD monitors are not very deep, but tend to be expensive and relatively poor in display quality compared to CRT monitors.

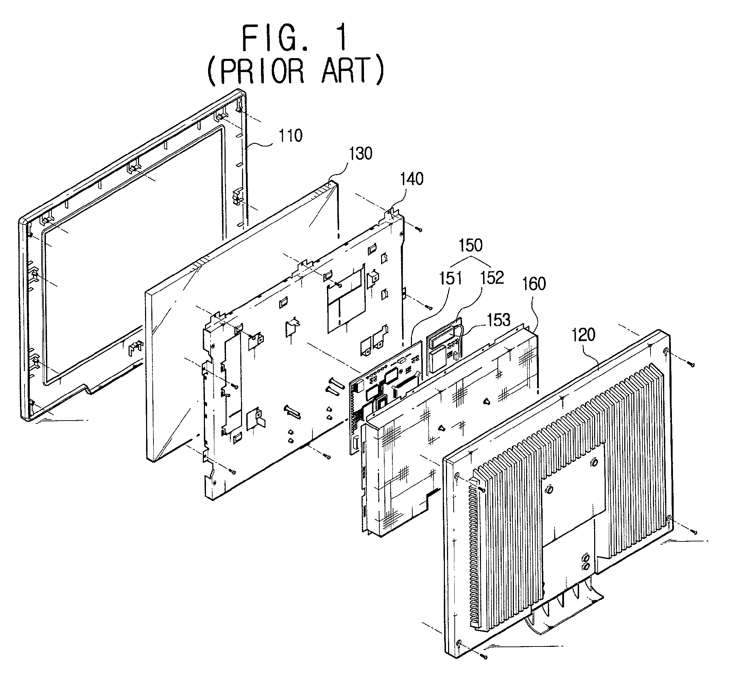

A conventional LCD display apparatus is shown in Figure 1 comprising front and rear covers 110 and 120 coupled to each other to provide a predetermined accommodating space therebetween, an LCD panel 130 having a surface on which a picture is displayed, a panel supporting member 140 supporting the LCD panel 130, and a printed circuit board (PCB) assembly 150 which is supported by a PCB cover 160 and which transmits electric signals to the LCD panel 130.

The PCB assembly 150 includes a main PCB 151 providing a video signal to the LCD panel 130, and a TV tuner PCB 152 accommodating a TV tuner 153 electrically connected to the main PCB 151 and arranged to receive a TV video signal therefrom.

The main PCB 151 is arranged to receive video signals from a personal computer (not shown) and to provide corresponding electric signals to the LCD panel 130 through a signal processor, which includes an analogue/digital (A/D) converter and a scaler. Further, the main PCB 151 is arranged to receive TV video signals from the TV tuner 153 and to provide corresponding electric signals to the LCD panel 130 through the signal processor.

The TV tuner 153 is connected to receive TV video signals without a separate device such as a personal computer, and to provide corresponding TV video signals to the LCD panel 130 through the main PCB 151. Thus, the TV tuner PCB 152 is provided also with a video decoder (not shown), which converts analogue video signals received through the TV tuner 153 into digital video signals for transmission to the signal processor of the main PCB 151. Consequently, the signal processor of the main PCB 151 is arranged to provide digital video signals including horizontal/vertical signals or YUV digital signals received from the TV tuner PCB 152 to the LCD panel 130 through a control part and the scaler. Consequently, the conventional display apparatus can provide the TV video signal without requiring a separate device. However, since the TV tuner 153 and the TV tuner PCB 152 are integrally installed in the PCB assembly 150 inside the PCB cover 160, the TV tuner 153 is not available separately from the remainder of the apparatus.

The first aspect of the invention is characterised in that the tuner accommodating part is accessible via an aperture formed in or by the housing and is dimensioned to receive a tuner unit.

The present invention may be achieved by providing a display apparatus including a liquid crystal display (LCD) panel, a main printed circuit board (PCB) having a signal processor processing and transmitting a video signal to the LCD panel, a PCB supporting member supporting the main PCB, a front cover, a rear cover attached to the front cover to accommodate the LCD panel, the main PCB, and the PCB supporting member, the rear cover having a through hole, a TV tuner unit including a TV tuner receiving a TV video signal, a casing accommodating the TV tuner and having a projection, and a tuner accommodating part including a housing receiving the TV tuner unit, a projection holder locking and releasing the projection of the casing of the TV tuner unit, and a pushing part inserted into the through hole of the rear cover to control the projection holder to lock onto the projection of the TV tuner unit when the TV tuner unit is inserted into the tuner accommodating part and to release the projection from the projection holder when the TV tuner unit is removed from the tuner accommodating part.

The tuner unit accommodating part may be removably combined with at least one of the rear cover and the PCB supporting member and includes at least one hook. One of the rear cover and the PCB supporting member is provided with at least one hook holder coupled to the hook.

The projection holder may be incorporated with the pushing part. The display apparatus may include an elastic member having a first end being in contact with the housing of the tuner unit accommodating part and a second end being in contact with the pushing part, and the pushing part may be biased in a direction opposite to a pushing direction to couple the projection to the projection holder.

According to a second aspect of the invention, there is provided a tuner unit for use with display apparatus, the tuner unit comprising: a casing; a tuner printed circuit board (PCB) disposed in the casing; tuner circuitry contained in the casing and coupled to the tuner PCB; an earth part formed on or connected to the tuner PCB; an aperture formed in the casing in register with the earth part; and a connector in register with a connector aperture in the casing.

Further, the TV tuner unit may include an earth terminal exposed to an outside of the casing, and at least one of the rear cover and the PCB supporting member may be provided with an earth spring being in contact with the earth terminal of the TV tuner unit. Further, the TV tuner unit may be provided with an earth terminal through hole through which the earth terminal is exposed, and the tuner unit accommodating part may be provided with an earth spring through hole communicating with the earth terminal through hole to allow the earth spring to be inserted into the earth spring through hole and the earth terminal through hole and to be in contact with the earth terminal of the TV turner unit.

The tuner unit accommodating part and the TV tuner unit may be provided with guiding parts, respectively, to guide the TV tuner unit within the tuner accommodating part.

According to a third aspect of the invention, there is provided a method of assembling a display apparatus, the method comprising: coupling a printed circuit board (PCB) having a connection port to a PCB supporting member having an earth spring and a port opening receiving the connection port; coupling a tuner accommodating part having an earth spring aperture a connector aperture, and a tuner receiving aperture to the PCB supporting member; coupling a rear cover having a tuner unit opening and a release part aperture to a front cover, thereby accommodating the display panel, the main PCB and the PCB supporting member between the covers, the tuner accommodating part being disposed between the rear cover and the PCB supporting member; inserting a release member through the release aperture so as to be movably coupled to the tuner accommodating part; an inserting a tuner unit having a tuner, an earth part, and a connector into the tuner accommodating part through the tuner unit opening, thereby connecting the connector of the tuner unit to the connection, connecting the earth spring of the PCB supporting member to the earth part of the tuner unit through the earth spring aperture of the tuner accommodating part and connecting the release member onto the tuner unit.

An embodiment of the invention will now be described, by way of example only, with reference to the accompany drawings, of which:
Figure 1 is a rear exploded perspective view of a conventional display apparatus;
Figure 2 is a front perspective view of a display apparatus according to one aspect of the present invention;
Figure 3 is a rear perspective view of the display apparatus of Figure 2;
Figure 4 is a rear exploded perspective view of the display apparatus of Figure 2;
Figure 5 is a block diagram of internal components of the display apparatus of Figure 2;
Figure 6 illustrates the combination of a PCB supporting member and a rear cover in the display apparatus of Figure 2;
Figure 7 is an exploded perspective view of a TV tuner unit of the display apparatus of Figure 2;
Figure 8 is an exploded perspective view of a tuner unit accommodating part of the display apparatus of Figure 2; and
Figures. 9 and 10 illustrate an assembling state such that a connector of the TV tuner unit of the tuner unit accommodating part is coupled to a connection part of a main PCB when the tuner unit accommodating part is inserted into the display apparatus of Figure 2.

In the drawings, like reference numerals refer to like elements throughout.

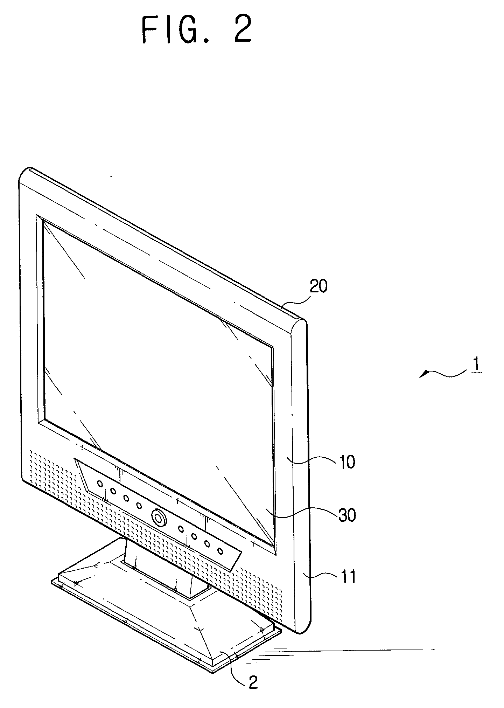

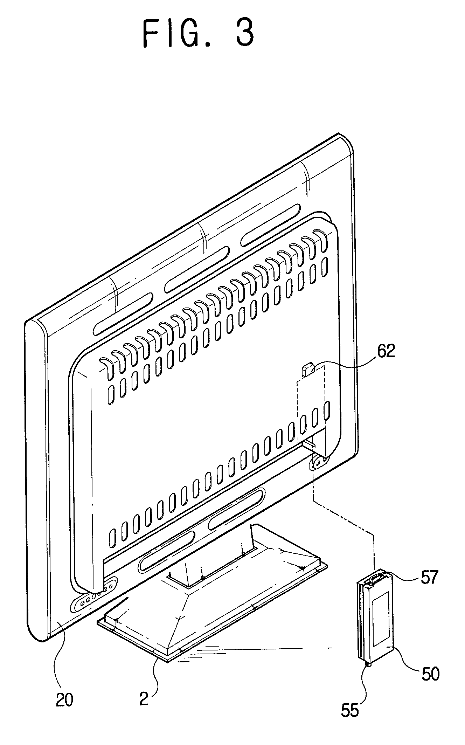

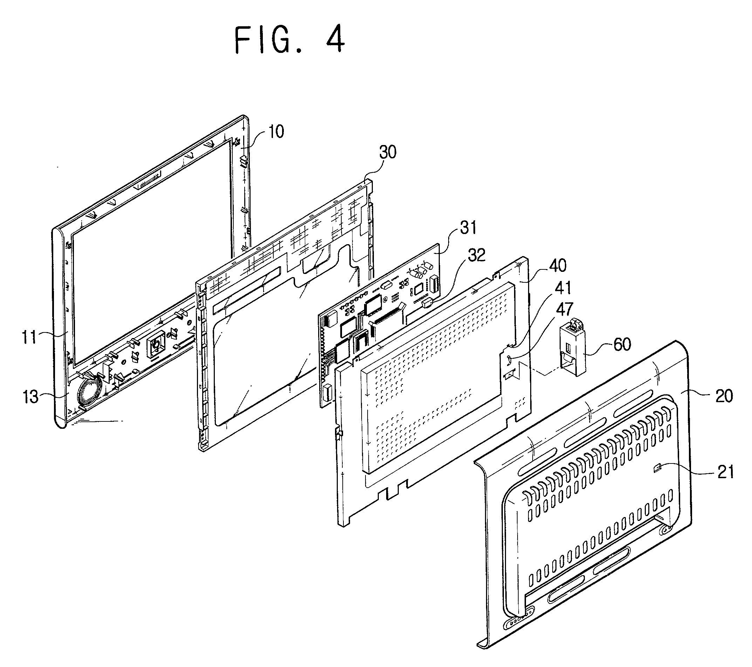

In Figure 2, a display apparatus 1 usable with a computer or a TV set, for example is shown, supported by a support 2. A front cover 10 is coupled to a rear cover 20, and a liquid crystal display (LCD) panel 30 is visible through a front part 11 of the front cover 10. As can be seen in Figures 3 and 4, the front and rear covers 10 and 20 are coupled to each other to form a predetermined accommodating space therebetween. The LCD panel 30 has an effective surface on which a picture is displayed. Here, the "effective surface" denotes a surface of the LCD panel 30 which is exposed through the front cover 10. A printed circuit board (PCB) supporting member 40 supports a main PCB 31 and a connection port 32, as well as the LCD panel 30. A removable TV tuner unit 50 is provided on the rear cover 20, and is arranged to receive TV video signals, and to transmit corresponding signals to the main PCB 31 via the connection port 32.

The front cover 10 includes a front part 11 having an opening through which the LCD panel 30 is visible, and a skirt part 13 bent toward the rear cover 20 on all sides of the front part 11. The LCD panel 30 and the main PCB 31 are included at the back of the front cover 10.

A push release part 62 protrudes outwardly through a push release part through-hole 21, formed in the rear cover 20 to hold and release the TV tuner unit 50. A connector 57 of the TV tuner unit 50 is connected to the connection port 32, which protrudes from the PCB supporting member 40 through a port opening 41 formed in the PCB supporting member. An antenna jack 55 of the TV tuner unit 50 is coupled to an external TV signal source (not shown). An earth spring (ground) 47, formed on the PCB supporting member 40, is connected to the TV tuner unit 50 when it is inserted into a tuner unit accommodating part 60.

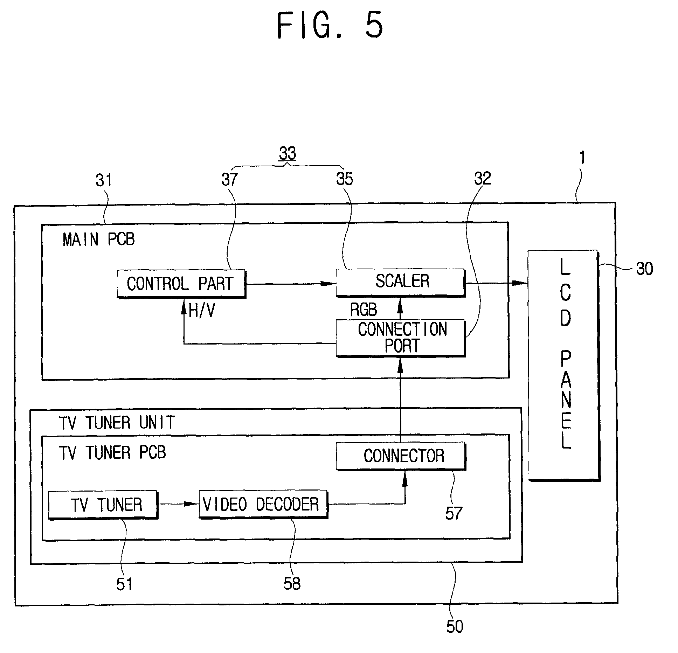

Referring to Figure 5, the main PCB 31 includes the connection port 32 through which a video signal from the TV tuner unit 50 is provided to the main PCB 31, a signal processing part 33 having a control part 37 and a scaler 35 arranged to convert the video signal received via the connection port 32 to be suitable for display on the LCD panel 30. The TV tuner unit 50 includes a TV tuner 51, a decoder 58, and a connector 57. The connector 57 is coupled to the connection port 32.

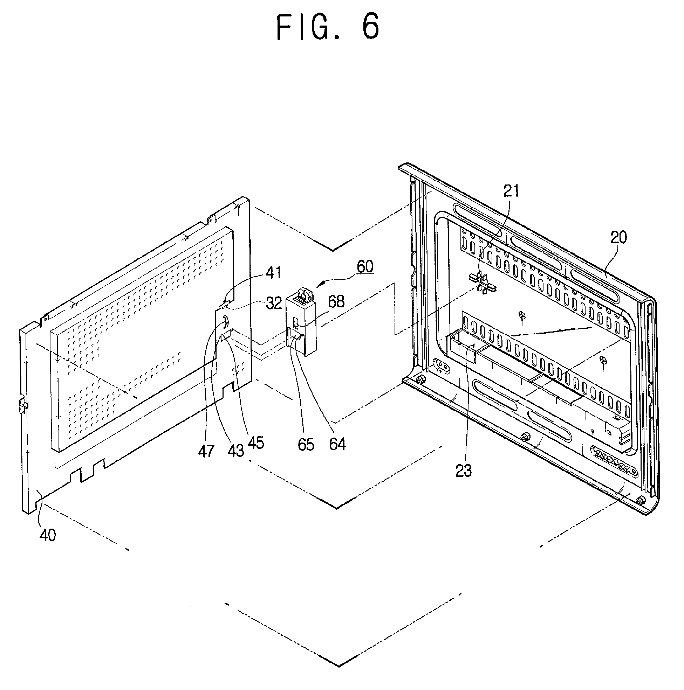

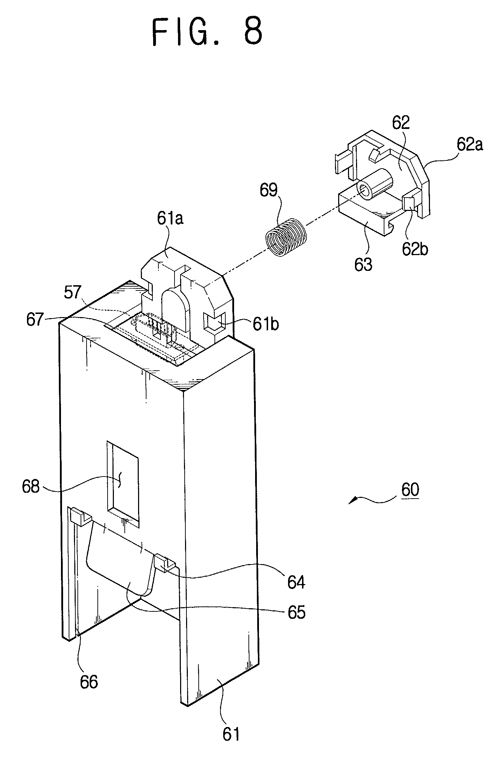

The connection port 32 is, as shown in Figures. 4 and 6, formed on a portion of the main PCB 31 and exposed to a rear surface of the PCB supporting member 40 through the port opening 41. Here, a position of the connection port 32 corresponds to a connector opening 67 of the tuner unit accommodating part 60, shown in Figure 8. Thus, the connection port 32 mates with the connector 57 exposed to an outside of the TV tuner unit 50 through the connector opening 67 of Figure 8 when the TV tuner unit 50 is inserted in the tuner unit accommodating part 60, thereby allowing video signals received from the TV tuner unit 50 to pass to the main PCB 31.

From the video signal inputted through the connection port 32, red, green and blue (RGB) signals are sent to the scaler 35, and horizontal and vertical synchronous signals are sent to the control part 37. The control part 37 determines the resolution of the LCD panel 30 depending upon the horizontal and vertical synchronous signals, and outputs a control signal according to the resolution to the scaler 35. The scaler 35 then adjusts the RGB signals received through the connection port 32 to make them appropriate to the size of the LCD panel on the basis of the control signal generated from the control part 37, thereby allowing an image corresponding to the adjusted RGB signals on the LCD panel 30 to be displayed.

The PCB supporting member 40 is substantially planar, and has a housing space for accommodating the main PCB 31. It also covers a rear surface of the main PCB 31, as shown in Figures 4 and 6. Further, the PCB supporting member 40 is made of a shielding material, such as metal, to block electromagnetic waves generated by the main PCB 31 and the LCD panel 30.

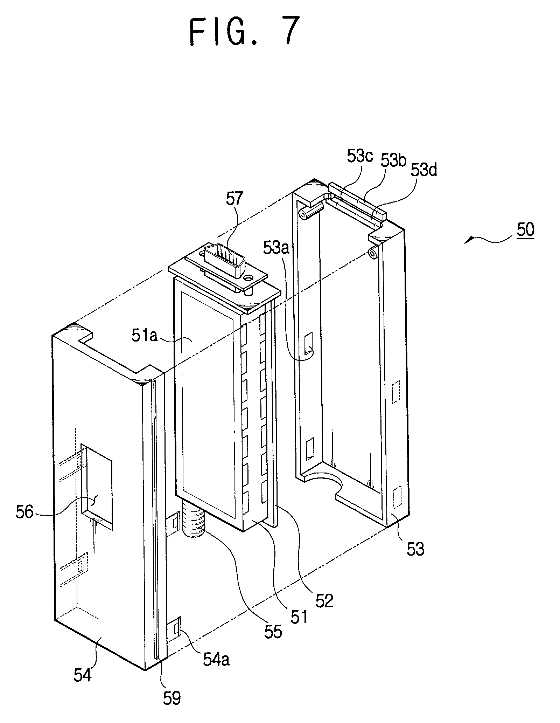

First and second hook holders 43 and 45, formed on the PCB supporting member 40 below the port opening 41, correspond to first and second hooks 64, 65 as shown in Figure 6. The earth spring 47 is disposed between the port opening 41 and the first and second hook holders 43 and 45 so as to be in contact with an earth part 51a (Figure 7) of the TV tuner 51.

The port opening 41 is formed such that the connection port 32 of the main PCB 31 is exposed to the outside of the PCB supporting member 40 therethrough, allowing the connection part to mate with the connector 57 of the TV tuner unit 50.

The first and second hook holders 43 and 45 are, as shown in FIG. 6, formed to removably receive the first and second hooks 64 and 65, allowing removable connection of the tuner unit accommodating part 60 to the PCB supporting member 40.

The rear cover 20 is connected to the front cover 10, accommodating the LCD panel 30, the main PCB 31 and the PCB supporting member 40. A tuner unit opening 23 is formed on the rear cover 20, to allow the TV tuner unit 50 to be inserted into the tuner accommodating part 60.The TV tuner unit 50 is insertable into the tuner unit accommodating part 60 through the tuner unit opening 23 along the inside of the rear cover 20, and only a button 62a of the push release part 62 is exposed at the back of the rear cover 20. As a result, the appearance of the rear of the display apparatus 1 is neat and simple as shown in Figure 3.

Referring to Figure 7, the TV tuner unit 50 includes the TV tuner 51, a TV tuner PCB 52 mounted with the TV tuner. Upper and lower casings 53 and 54 are connected together to accommodate the TV tuner 51 and the TV tuner PCB 52. A projection 53b is provided on the upper casing 53. The connector 57 is exposed so as to be accessible when the upper and lower casings 53 and 54 are connected together. An antenna jack 55 is connected to an external antenna (not shown).

The TV tuner 51 is operable to convert received TV video signals into video signals for provision to the LCD panel 30 without any additional device, such as a computer. The video decoder 58 converts the TV video signals received at the TV tuner 51 into digital signals including H/V signals and YUV digital signals. These digital signals, also known as video signals, are sent to the signal processing part 33 of the main PCB 31 through the connector 57.

At respective edges of the upper and lower casings 53 and 54 are provided a plurality of hook holders 53a and hooks 54a, which couple together the upper and lower casings by press-fitting.

The projection 53b has an inclined portion 53c and a groove 53d. A projection holder 63 of the tuner unit accommodating part 60 (Figure 8) is slidable along the inclined portion 53c for insertion into the groove 53d, to hold the TV tuner unit 50 in the tuner unit accommodating part 60 when the push release part 62 is coupled to a coupling element 61a of Figure 8. When the push release part is depressed, the projection holder 63 is released from the groove 53d and is slidable along the inclined portion 53c as the push release part 62 is pushed against the coupling element 61a.

On the lower casing 54 is provided an earth part through-hole 56, through which the earth part 51a of the TV tuner 51 can contact the earth spring 47 of the PCB supporting member 40.At opposite sides of the lower casing 54 are provided guiding projections 59, which prevent the TV tuner unit 50 from being inserted into the tuner unit accommodating part 60 the wrong way around.

The antenna jack 55 protrudes from a lower part of the connected together upper and lower casings 53 and 54.

Further, the connector 57 is connected to the TV tuner PCB 52. Digital signals provided by the video decoder 58 are transmitted to the signal processing part 33 of the main PCB 31 through the connection port 32. The signal processing part 33 of the main PCB 31 sends the digital signals to the LCD panel 30, thereby displaying an image corresponding to the TV video signals on the display apparatus 1.

The housing 61 is made of plastic and has a box shape sufficiently large as to accommodate the TV tuner unit 50 therein. Further, in the housing 61 are provided guiding rails 66, which engage with the guiding projections 59 of the TV tuner unit 50 to prevent the TV tuner unit being inserted the wrong way around. The connector opening 67 allows the connector 57 of the TV tuner unit 50 to be exposed, and the earth spring through-hole 68 allows the earth spring 47 to make contact with the earth part 51a.

The earth spring through-hole 68 is provided on the housing 61 and communicates with the earth part through-hole 56 of the TV tuner unit 50. Thus, the earth spring 47 is insertable through the earth spring through-hole 68 and the earth part through hole 56, to make contact with the earth part of the TV tuner 51.

The projection holder 63 is releasable from the projection 53b by depression of the push release part 62,to allow the TV tuner unit 50 to be removed from the tuner unit accommodating part 60. When the pushing part 62 is not being depressed, it is biased to an original position by an elastic member 69, in the form of a coiled spring, disposed between the push release part 62 and the housing 61.

The first hook 64 is bent upwardly from the housing 61, and hooked on the first hook holder 43 of the PCB supporting member 40. The second hook 65 is downwardly protruding at a predetermined angle, and hooked onto the second hook holder 45 of the PCB supporting member 40. The second hook 65 is hooked firstly, and the first hook 64 is hooked afterwards, thereby connecting the tuner unit accommodating part 60 with the PCB supporting member 40.

An assembly process of the display apparatus is described.

First, the PCB supporting member 40, along with the main PCB 31, is arranged at the rear portion of the LCD panel 30 (the display surface of the LCD panel 30 is facing towards the front cover 10), and then the front cover 10 and the PCB supporting member 40 are coupled to each other. Then, the first and second hooks 64 and 65 of the tuner unit accommodating part 60 are hooked onto the first and second hook holders 43 and 45 of the PCB supporting member 40. Then, the rear side of the PCB supporting member 40, accommodating the tuner unit accommodating part 60, is covered with the rear cover 20, and the rear cover 20 and the front cover 10 are then secured closed.

Afterwards, the push release part 62 is inserted into the through-hole 21, and the earth spring 47 is partially inserted into the earth spring through hole 68.

Then, the TV tuner unit 50 is inserted into the tuner unit accommodating part 60 through the tuner unit opening 23 of the rear cover 20. At this time, the TV tuner unit 50 is guided into the tuner unit accommodating part 60 by interaction of the guiding projections 59 and the guiding rails 66.

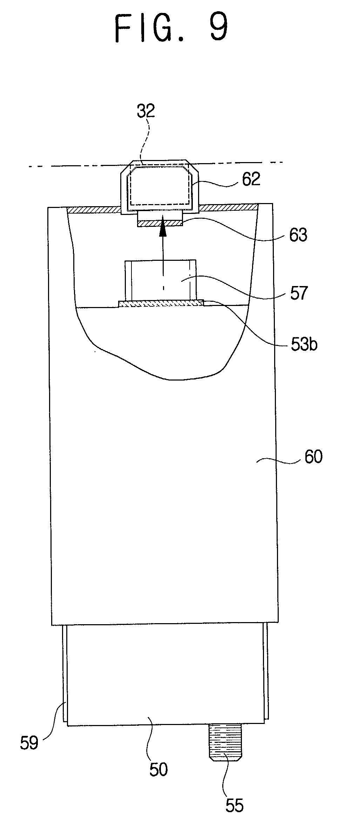

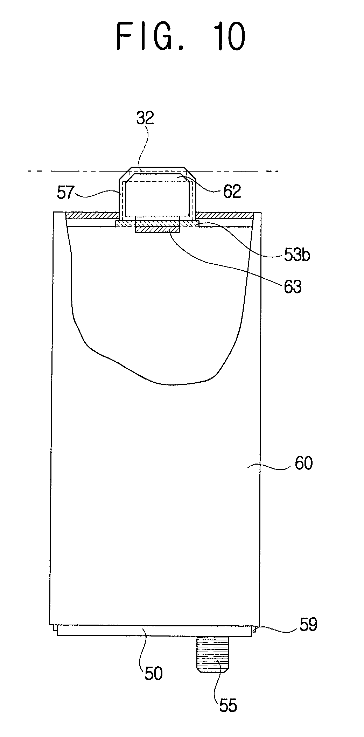

Subsequently, the projection 53b is locked onto the projection holder 63,, thereby connecting the TV tuner unit 50 to the tuner unit accommodating part 60. The connector 57 mates with the connection port 32 provided on the main PCB 31 as shown in Figures 9 and 10. Further, the earth spring 47 protrudes through the earth spring through-hole 68 and the earth part through-hole 56 to contact with the earth part 51a of the TV tuner 51.

The process of removing the TV tuner unit 50 from the tuner unit accommodating part 60 is performed in a reverse order to the assembly process. Thus, the TV tuner 51 is easily connected to and removed from the display apparatus 1 using the tuner unit accommodating part 60 provided in the rear cover 20, by virtue of the removable connectability of the TV tuner unit 50. Therefore, the display apparatus and the TV tuner unit may be sold separately, allowing a user to buy the TV tuner unit to upgrade the display apparatus to a TV receiver.

In the above embodiment, the first and second hooks 64 and 65 engaged with the first and second hook holders 43 and 45. However, any suitable coupling arrangement, such as one involving a screw and a screw hole, may be used instead.

As described above, the embodiments provides a display apparatus which a TV tuner can easily be connected to or removed from without requiring disassembly of the display apparatus or removal of any cover thereof.

## Claims

1. Display apparatus (1) comprising a display panel (30) mounted within a housing (10, 20); and
a tuner accommodating part (60) disposed within the housing,
**characterised in that** the tuner accommodating part is accessible via an aperture (23) formed in or by the housing and is dimensioned to receive a tuner unit (50).

2. Display apparatus as claimed in claim 1, comprising a release member (62) accessible to the outside of the housing for releasing the tuner unit (50) from the tuner accommodating part (60).

3. Display apparatus according to claim 1 or claim 2, wherein the release member (62) is biased into a non-releasing position.

4. Display apparatus as claimed in any preceding claim, in which the tuner unit (50) comprises tuner circuitry contained within a casing (53, 54) and includes a connector (57) exposed to the exterior of the casing.

5. Display apparatus as claimed in claim 4 when dependent on claim 2 or claim 3, in which the casing (53, 54) and the release (62) include a cooperating aperture and projection arrangement (53d, 63).

6. Display apparatus as claimed in claim 5, in which one of the projection and the aperture includes an angled surface, so as to cause the release (62) to be moved against the bias when the tuner unit (50) is inserted into the tuner accommodating part (60).

7. Display apparatus as claimed in any of claims 4 to 6, in which the connector (57) of the tuner unit is connectable to an input connector (32) forming part of the display apparatus (1).

8. Display apparatus as claimed in claim 7, in which the input connector is secured to a printed circuit board (PCB) (31) contained within the housing.

9. Display apparatus as claimed in claim 8, in which the input connector extends through an aperture (41) formed in a supporting member (40) , which supports the PCB.

10. Display apparatus as claimed in any preceding claim, in which a guide (59, 66) is included on at least one of the tuner accommodating part and the tuner unit so as to disallow insertion of the tuner unit in an incorrect orientation

11. Display apparatus as claimed in any preceding claim, in which a hook arrangement (43, 45, 64, 65) connects the tuner accommodating part to one of the PCB supporting member and a rear cover (20) of the housing.

12. Display apparatus as claimed in any preceding claim, further comprising an earth contact (47) extending from a or the PCB.

13. Display apparatus as claimed in claim 12, in which the earth contact extends through an aperture (68) in the tuner accommodating part, to contact an earth part (51a) of the tuner unit when inserted into the tuner accommodating part.

14. A tuner unit (50) for use with display apparatus, the tuner unit comprising:
a casing (53, 54);
a tuner printed circuit board (PCB) (52) disposed in the casing;
tuner circuitry contained in the casing and coupled to the tuner PCB;
an earth part (51a) formed on or connected to the tuner PCB;
an aperture (56) formed in the casing in register with the earth part; and
a connector (57) in register with a connector aperture in the casing.

15. A tuner unit as claimed in claim 14, comprising a decoder (58) disposed on the tuner PCB and coupled between the tuner and the connector, the decoder being arranged to convert a television signal into a video signal and to supply the video signal to the connector.

16. A tuner unit as claimed in claim 15, wherein the earth part and the connector are disposed on different faces of the casing.

17. A tuner unit as claimed in any of claims 14 to 16, wherein the tuner unit includes an antenna jack (55), preferably protruding from the casing, for receiving a television signal.

18. A tuner unit as claimed in claim 17, wherein the antenna jack is disposed on a different face of the casing to the earth part and the connector, preferably on an opposite face to the connector.

19. A method of assembling a display apparatus (1), the method comprising:
coupling a printed circuit board (PCB) (31) having a connection port (32) to a PCB supporting member (40) having an earth spring (47) and a port opening (41) receiving the connection port;
coupling a tuner accommodating part (60) having an earth spring aperture (68), a connector aperture (41), and a tuner receiving aperture to the PCB supporting member;
coupling a rear cover (20) having a tuner unit opening (23) and a release part aperture (21) to a front cover (10), thereby accommodating the display panel, the main PCB and the PCB supporting member between the covers, the tuner accommodating part being disposed between the rear cover and the PCB supporting member;
inserting a release member (62) through the release aperture so as to be movably coupled to the tuner accommodating part; and
inserting a tuner unit (50) having a tuner (51), an earth part (51a), and a connector (57) into the tuner accommodating part through the tuner unit opening, thereby connecting the connector of the tuner unit to the connection, connecting the earth spring of the PCB supporting member to the earth part of the tuner unit through the earth spring aperture of the tuner accommodating part and connecting the release member onto the tuner unit.

20. A display apparatus comprising an LCD panel, a main PCB having a signal processor processing and transmitting a video signal to the LCD panel, and a PCB supporting member supporting the main PCB, the display apparatus comprising:
a front cover;
a rear cover coupled to the front cover to accommodate the LCD panel, main PCB, and the PCB supporting member, and having a pushing part through hole;
a TV tuner unit including a TV tuner receiving a TV video signal, a casing accommodating the TV tuner, and a projection formed on the casing; and
a tuner accommodating part disposed between the rear cover and the PCB supporting member, including a housing into which the TV tuner unit is removably inserted, a projection holder locked onto and released from the projection of the casing, a pushing part exposed from the rear cover and inserted through the pushing part through hole of the rear cover to control the projection holder to be locked onto and released from the projection of the TV tuner unit.

21. The display apparatus according to claim 20, wherein the tuner accommodating part is removably coupled to one of the rear cover and the PCB supporting member.

22. The display apparatus according to claim 21, wherein the tuner accommodating part is provided with at least one hook, and the one of the rear cover and the PCB supporting member is provided with at least one hook holder coupled to the hook.

23. The display apparatus according to claim 20, wherein the projection holder is incorporated with the pushing part.

24. The display apparatus according to claim 20, wherein the tuner accommodating part comprises an elastic member having a first end being in contact with the housing and a second end being in contact with the pushing part, wherein the pushing part is biased in a direction opposite to a pushing direction pushing the pushing part against the projection of the casing.

25. The display apparatus according to claim 20, wherein the TV tuner unit comprises an earth terminal exposed from the casing, and one of the rear cover and the PCB supporting member is provided with an earth spring being in contact with the earth terminal of the TV tuner unit when the TV tuner unit is inserted into the tuner accommodating part.

26. The display apparatus according to claim 25, wherein the earth spring has one end being in contact with the PCB supporting member.

27. The display apparatus according to claim 25, wherein the TV tuner unit is provided with an earth part through hole through which the earth terminal is exposed, and the tuner accommodating part is provided with an earth spring through hole communicating with the earth part through hole to allow the earth spring to be in contact with the earth terminal.

28. The display apparatus according to claim 20, wherein the TV tuner unit comprises a TV tuner PCB having a decoder converting the TV video signal received from the TV tuner into a digital signal and transmitting the digital signal to the signal processor of the main PCB, and the signal processor generates the video signal in response to the digital signal.

29. The display apparatus according to claim 20, wherein the tuner accommodating part and the TV tuner unit are provided with respective guiding portions guiding the TV tuner unit upon insertion into the tuner accommodating part.

30. The display apparatus according to claim 29, wherein the guiding portions comprise:
guiding projections provided on opposite sides of the TV tuner unit; and
guiding rails provided on opposite inner walls of the tuner accommodating part, wherein the guiding projections respectively receive the guiding rails upon insertion of the TV tuner unit into the TV accommodating unit.

31. A display apparatus, comprising:
a display panel;
a main printed circuit board (PCB) having a signal processor transmitting a video signal to the display panel and a connection port connected to the signal processor;
a PCB supporting member supporting the main PCB and having a port opening receiving the connection port
a front cover;
a rear cover attached to the front cover to accommodate the display panel, the main PCB, and a PCB supporting member, the rear cover having a tuner unit opening;
a tuner accommodating part disposed between the PCB supporting member and the rear cover to be coupled to the PCB supporting member, having a housing, a connector opening formed on the housing corresponding to the port opening of the PCB supporting member, and a tuner receiving opening formed on the housing corresponding to the tuner unit opening of the rear cover; and
a TV tuner unit inserted from an outside of the rear cover into the tuner accommodating part through the tuner unit opening of the rear cover and the tuner receiving opening of the tuner accommodating part in an inserting direction, having a casing with an upper opening corresponding to the port opening of the PCB supporting and the connector opening of the tuner accommodating part, a TV tuner contained in the casing, and a connector formed on the TV tuner to protrude from the casing through the upper opening and coupled to the connection port of the main PCB through the connector opening of the tuner accommodating part and the port opening of the PCB supporting member.

32. The display apparatus of claim 31, wherein the TV tuner unit is detached from the tuner accommodating part through the tuner unit opening of the rear cover and the tuner receiving opening of the tuner accommodating part in a detaching direction opposite to the inserting direction without dissembling of the rear cover from the front cover.

33. The display apparatus of claim 31, wherein the tuner unit opening of the rear cover, the tuner receiving opening of the tuner accommodating part, the connector opening of the tuner accommodating part, and the connection port of the main PCB are arranged in line parallel to the inserting direction.

34. The display apparatus of claim 31, wherein the connection port of the main PCB protrudes from the main PCB towards the port opening and the connector opening in the inserting direction.

35. The display apparatus of claim 31, wherein the connector of the TV tuner projects from the casing towards the connection port in the inserting direction.

36. The display apparatus of claim 31, wherein the rear cover comprises a pushing part through hole, and the tuner accommodating part comprises a pushing part inserted into the pushing part through hole of the rear cover from the outside of the rear cover to be coupled to the casing of the TV tuner unit.

37. The display apparatus of claim 36, wherein the tuner accommodating part comprises a coupling element formed on the housing to be coupled to the pushing part.

38. The display apparatus of claim 35, wherein the tuner accommodating part comprises an elastic member having a first end being in contact with the coupling element of the housing and a second end being in contact with the pushing part, and the elastic member biasing the pushing part toward the outside of the rear cover.

39. The display apparatus of claim 36, wherein the TV tuner unit comprises a projection formed on the casing, and the pushing part comprises a projection holder coupled to the projection of the TV tuner unit when the TV tuner unit is inserted into the tuner accommodating part and when the connector of the TV tuner unit is coupled to the connection port of the main PCB.

40. The display apparatus of claim 39, wherein the projection comprises a groove and an inclined portion disposed adjacent to the groove to guide the projection holder to be smoothly inserted into and released from the groove.

41. The display apparatus of claim 31, wherein the tuner accommodating part comprises a guiding rail formed along an inside surface of the housing in the inserting direction, and the TV tuner unit comprises a guiding projection parallel to the guiding rail of the tuner accommodating part and is guided by the guiding rail and the guiding projection when the TV tuner unit is inserted into the tuner accommodating part.

42. The display apparatus of claim 31, wherein the PCB supporting member comprises an earth spring, the tuner accommodating part comprises an earth spring through hole formed on the housing to correspond to the earth spring of the PCB supporting member, and the TV tuner unit comprises an earth part formed on the TV tuner corresponding to the earth spring through hole of the tuner accommodating part, the earth spring of the PCB supporting member connected to the earth part of the TV tuner unit through the earth spring through hole of the tuner accommodating part.

43. The display apparatus of claim 42, wherein the TV tuner unit comprises an earth part through hole formed on the casing corresponding to the earth spring through hole of the tuner accommodating part, the earth spring connected to the earth part of the TV tuner through the earth part through hole.

44. The display apparatus of claim 43, wherein the earth spring projects from the PCB supporting member in a direction perpendicular to the inserting direction..

45. The display apparatus of claim 43, wherein the earth spring is coupled to the earth part of the TV tuner to direct an electromagnetic wave generated from the TV tuner unit into the PCB supporting member.

46. The display apparatus of claim 31, wherein the TV tuner unit comprises an antenna jack formed on the TV tuner and disposed at the tuner receiving opening of the tuner accommodating part and the tuner unit opening of the rear cover when the TV tuner unit is inserted into the tuner accommodating part.

47. The display apparatus of claim 46, wherein the antenna jack is formed on the TV tuner opposite to the connector in the inserting direction.

48. The display apparatus of claim 31, wherein the antenna jack projects from the rear cover through the tuner unit opening of the rear cover in a direction parallel to the inserting direction.

49. The display apparatus of claim 31, wherein the tuner accommodating part comprises at least one hook, and one of the rear cover and the PCB supporting member comprises at least one hook holder coupled to the corresponding hook of the tuner accommodating part.

50. The display apparatus of claim 31, wherein the PCB supporting member is made of a shield material to cut off an electromagnetic wave generated from the main PCB and the display panel.

51. The display apparatus of claim 31, wherein the casing of the TV tuner unit comprises an upper case, a lower case, a hook holder formed on the upper case, and a hook formed on the lower case coupled to the hook holder of the upper case.

52. The display apparatus of claim 31, wherein the housing of the tuner accommodating part is made of plastic and has a box shape to accommodate the TV tuner unit.

53. The display apparatus of claim 31, wherein the tuner accommodating part comprises a first hook upwardly bent from the housing and a second hook downwardly protruding at a predetermined angle from the housing, and the PCB supporting member comprises a first hook holder and a second hook holder coupled to the first hook and the second hook, respectively, to couple the tuner accommodating part to the PCB supporting member.

54. A display apparatus receiving a TV tuner unit, comprising:
a display panel;
a main printed circuit board (PCB) having a signal processor transmitting a video signal to the display panel and a connection port connected to the signal processor;
a PCB supporting member supporting the main PCB, and having a port opening receiving the connection port and an earth spring protruding toward the rear cover; a front cover;
a rear cover attached to the front cover to accommodate the display panel, the main PCB, and a PCB supporting member, the rear cover having a tuner unit opening; and
a tuner accommodating part disposed between the PCB supporting member and the rear cover and coupled to the PCB supporting member, having a housing, a connector opening formed on a first side of the housing corresponding to the port opening of the PCB supporting member to receive the connection port, an earth spring through hole formed on a second side of the housing corresponding to the earth spring, and a tuner receiving opening formed on a third side of the housing to receive the TV tuner unit inserted into the housing from an outside of the rear cover through the tuner unit opening of the rear cover in an inserting direction, the connection port of the main PCB and the earth spring of the PCB supporting member both coupled to the TV tuner unit.

55. The display apparatus of claim 54, wherein the TV tuner unit comprises a casing, a tuner PCB contained in the casing, a TV tuner contained in the casing and coupled to the tuner PCB to receive a TV signal, an earth part formed on the tuner PCB to be coupled to the earth spring of the PCB supporting member through the earth spring through hole of the housing, a connector formed on the tuner PCB and coupled to the connection port of the main PCB through the connector opening of the tuner accommodating part and the port opening of the PCB supporting member, and a decoder disposed in the tuner PCB to convert the TV signal to the video signal.

56. The display apparatus of claim 55, wherein the TV tuner unit comprises an upper opening formed on the casing corresponding to the port opening of the PCB supporting member and the connector opening of the tuner accommodating part, an earth part through hole formed on the casing corresponding to the earth spring through hole of the tuner accommodating part, and the connector coupled to the connection port of the main PCB through the upper opening, the earth part coupled to the earth spring through the earth part through hole.

57. The display apparatus of claim 55, wherein the TV tuner unit comprises an antenna jack formed on the TV tuner opposite to the connector and disposed adjacent to the tuner unit opening of the rear cover to receive the TV signal from an external source when the TV tuner unit is inserted into the tuner accommodating part.

58. The display apparatus of claim 55, wherein the second side of the housing is parallel to the inserting direction, and the first and third sides of the housing are perpendicular to the inserting direction.

59. The display apparatus of claim 55, wherein the tuner accommodating part comprises a pushing part inserted from the outside of the rear cover into an inside of the rear cover to couple the TV tuner unit to the housing of the tuner accommodating part.

60. A TV tuner unit for a display apparatus, comprising:
a casing having a first surface and a second surface;
a tuner PCB contained in the casing;
a TV tuner contained in the casing and coupled to the tuner PCB to receive a TV signal;
an earth part formed on the tuner PCB;
an earth part through hole formed on the first surface of the casing corresponding to the earth part of the TV tuner;
a connector opening formed on the second surface of the casing;
a connector formed on the tuner PCB to protrude from the casing through the connector opening; and
a decoder disposed in the tuner PCB and coupled between the TV tuner and the connector to convert the TV signal into a video signal and transmit the video signal to an outside of the TV tuner unit through the connector.

61. The TV tuner unit of claim 60, wherein the first and second surfaces of the casing are not disposed on the same plane of the casing.

62. The TV tuner unit of claim 60, wherein the TV tuner comprises an antenna jack protruding from the casing to receive the TV signal.

63. The TV tuner unit of claim 62, wherein the casing comprises a third surface and an antenna opening formed on the third surface corresponding to the antenna jack, and the antenna jack protrudes the casing through the antenna opening.

64. The TV tuner unit of claim 63, wherein the third surface is disposed opposite to the second surface with respect to the first surface.

65. A method in a display apparatus, comprising:
coupling a main printed circuit board (PCB) having a processor and a connection port to a PCB supporting member having an earth spring and a port opening receiving the connection port of the main PCB;
coupling the PCB supporting member to a display panel and a front cover; coupling a tuner accommodating part having an earth spring through hole, a connector opening, and a tuner receiving opening to the PCB supporting member;
coupling a rear cover having a tuner unit opening and a pushing part through hole to the front cover to accommodate the display panel, the main PCB, the PCB supporting member between the front cover and the rear cover, the tuner accommodating part disposed between the rear cover and the PCB supporting member;
inserting a pushing unit from an outside of the rear cover through the pushing part through hole to be movably coupled to the tuner accommodating part;
inserting a TV tuner unit having a TV tuner, an earth part, and a connector into the tuner accommodating part through the tuner unit opening of the rear cover and the tuner receiving opening of the tuner accommodating part;
connecting the connector of the TV tuner unit to the connection port of the main PCB through the port opening of the PCB supporting member and the connector opening of the tuner accommodating part;
connecting the earth spring of the PCB supporting member to the earth part of the TV tuner unit through the earth spring through hole of the tuner accommodating part; and
connecting the pushing part to the TV tuner unit.
